# EUROPÄISCHE PATENTSCHRIFT

(11) **EP 2 409 902 B1**
(45) Veröffentlichungstag und Bekanntmachung des Hinweises auf die Patenterteilung: **09.09.2015**
(21) Anmeldenummer: 11005561.3
(22) Anmeldetag: 07.07.2011
(51) Int. Cl.: B62D 55/30

(54) **Kettenlaufwerk und Arbeitsmaschine**
Track drive and work machine
Dispositif d'entraînement à chenille et machine de travail

(30) Priorität: 22.07.2010 DE 102010031834
(43) Veröffentlichungstag der Anmeldung: 25.01.2012
(73) Patentinhaber: Liebherr-Werk Nenzing GmbH, 6710 Nenzing (AT)
(72) Erfinder: Juen, Peter, Ing., 6771 St. Anton (AT); Haiden, Werner, Dipl.-Ing., 6713 Ludesch (DE)
(74) Vertreter: Laufhütte, Dieter

(56) Entgegenhaltungen:
- EP-A1- 0 052 310
- DE-A1- 2 344 875
- DE-A1- 2 909 346
- DE-A1-102005 043 341
- US-A- 3 198 587
- US-A- 3 907 382
- US-B1- 6 224 172

## Beschreibung

Die vorliegende Erfindung betrifft ein Kettenlaufwerk für eine Arbeitsmaschine, insbesondere für einen Raupenkran oder einen Raupenbagger, mit einer Antriebsraupenkette, wenigstens einem verschieblich gelagerten Kettenrad, insbesondere einem Leit- oder Leerlaufrad, und mindestens einem Spannmittel, um die Raupenkette zu spannen.

Kettenlaufwerke für Arbeitsmaschinen bestehen im wesentlichen aus einer Raupenkette, die eine Vielzahl miteinander verbundener Gelenkkomponenten oder Verbindungen besitzt. Ferner sind wenigstens ein Antriebsrad und/oder ein Führungsrad sowie eine begrenzte Anzahl von Leerlaufrädern vorgesehen, wobei die Raupenkette durch jedes der Kettenräder geführt wird.

Um die korrekte Führung der Kette auf den Kettenrädern zu gewährleisten, muss die Spannung der Kette während des Betriebs aufrechterhalten werden. Hierzu dient ein entsprechendes Spannmittel, das die Kette auf das gewünschte Spannungsniveau bringt. Als Spannungsmittel dient beispielsweise ein Hydraulikzylinder oder eine Schraubenfeder, die das vordere Leit- bzw. Führungsrad des Kettenlaufwerks auf die Kette drücken, um die gewünschte Kettenspannung zu erzeugen. Der anliegende Druck im Hydraulikzylinder bestimmt die aufgebrachte Spannung auf die Kette.

Mit zunehmender Betriebszeit treten in der Regel Abnutzungserscheinungen an den einzelnen Kettenkomponenten, insbesondere an den Verbindungspunkten der einzelnen Kettenglieder auf, was zu einem Nachlassen der Kettenspannung und weiter zum Durchhängen der Kette führt. Der übermäßige Durchhang der Kette bedingt eine unregelmäßige Abnutzung der einzelnen Kettenkomponenten und kann darüber hinaus eine Entgleisung der auf den Kettenrädern geführten Kette auslösen. Um diesem Phänomen entgegenzutreten, ist es erforderlich, dass die auf die Kette angelegte Spannung durch das Spannungsmittel bei Bedarf reguliert wird.

Hierbei ist jedoch darauf zu achten, dass ein Überspannen der Kette durch das Spannungsmittel zu vermeiden ist. Eine zu straff eingestellte Kette kann auf Dauer die Haltbarkeit der Kette massiv einschränken, da in diesem Fall die auftretenden Verschleißerscheinungen der einzelnen Kettenkomponenten weitaus schneller fortschreiten.

Gleichwohl kann es ebenfalls wünschenswert sein, dass die Kettenspannung an die jeweiligen Arbeitsbedingungen der Arbeitsmaschine anzupassen ist. So ist es wünschenswert, die Kette während des Arbeitsbetriebs auf ein maximales Spannungsniveau zu spannen, wohingegen während des Fahrtbetriebs eine demgegenüber reduzierte Kettenspannung ausreichend ist und so eine Optimierung der potentiellen Kettenlebensdauer zulässt.

Bei bekannten Spannungsmitteln, wie Hydraulikzylindern, wird die jeweilige Kettenspannung durch die Druckverhältnisse im Hydraulikzylinder bestimmt. Dabei gilt es, dass der Anstieg des Druckniveaus im Hydraulikzylinder eine Erhöhung der Kettenspannung zur Folge hat. Der vorgestellte Lösungsansatz erfordert jedoch kospielige Hydraulikkomponenten, wie z. B. Druckbegrenzungsventile zur Druckregulierung.

DE 23 44 875 A1 offenbart eine Vorrichtung zum Spannen von Gleisketten an gefederten Kettenfahrzeugen, wobei ein drehstabgefedertes Laufrad entgegen dem Kettenzug durch einen Kettenspanner in seiner Lage gehalten wird. Das Laufrad ist gegenüber dem Fahrzeug und entgegen dem Kettenzug verschiebbar ausgebildet.

EP 0 052 310 A1 bezieht sich auf eine Gleiskettenspanneinrichtung, die insbesondere bei einem Raupenschlepper, verwendet wird. Diese bekannte Gleiskettenspanneinrichtung besteht aus einem Gleiskettenrahmen, an dessen hinterem Ende fluchtend mit dem Leitrad ein Federwiderlager fest montiert ist.

DE 29 09 346 A1 offenbart ein Raupenfahrzeug mit einer endlosen Raupenkette sowie einer in Fahrzeug angeordneten Antriebsradachse, auf der ein Antriebsrad aufgenommen ist. Bei dieser Druckschrift wird durch Beilegplätten die Bewegung der Achse nach vorne begrenzt. Diese Lösung hat allerdings den Nachteil, dass die Schraubenverbindung, die den Deckel zur Aufnahme der Beilegplatten fixiert, sehr stark dimensioniert sein muss, da die Schrauben dadurch voll auf Zug belastet werden.

All diese Vorrichtungen beschäftigen sich mit der Spannung oder dem Nachspannen von Laufwerksketten, enthalten allerdings keinen Hinweis bezüglich einer Begrenzung dieser Spannung.

Aus der DE 10 2005 043 341 A1 ist eine Raupenarbeitsmaschine bekannt, die sich insbesondere auf ein Laufradspannungssystem für eine Raupenarbeitsmaschine mit einer Gasfeder bezieht, welche betreibbar ist, um ausgewählte Lasten auf dem Laufrad zu absorbieren. Diese Druckschrift offenbart einen Anschlag, der lediglich dazu dient, die Kompression der Gasfeder zu begrenzen.
Aufgabe der vorliegenden Erfindung ist es daher, eine vereinfachte und verbesserte Ausführung für ein Kettenlaufwerk aufzuzeigen. Insbesondere soll ein alternativer

Lösungsansatz für die Umsetzung eines Kettenspannmechanismus aufgezeigt werden.

Diese Aufgabe wird durch ein Kettenlaufwerk mit den Merkmalen des Anspruchs 1 gelöst. Weitere vorteilhafte Ausführungen sind Gegenstand der abhängigen Unteransprüche.

Gemäß dem Anspruch 1 wird also ein Kettenlaufwerk für eine Arbeitsmaschine, insbesondere für einen Raupenkran oder einen Raupenbagger vorgeschlagen, mit einer Antriebsraupenkette, wenigstens einem verschieblich gelagerten Kettenrad, insbesondere einem Leit- oder Leerlaufrad, und mindestens einem Spannmittel, um die Raupenkette zu spannen. Die Antriebsraupenkette wird in an sich bekannter Weise über das Kettenrad geführt. Wenigstens ein Kettenrad ist verschieblich gelagert, und zwar derart, so dass die Verschiebung in Richtung der aufliegenden Kette erfolgt und der Druck des Kettenrades auf die Ketteninnenseite erhöht wird. Über die Betätigung des Spannmittels ist die Kettenspannung einstellbar.

Das erfindungsgemäße Kettenlaufwerk ist derart ausgebildet, dass es wenigstens einen Anschlag vorsieht, der die Verschiebung des verschieblich gelagerten Kettenrades begrenzt. Der Anschlag ist erfindungsgemäß verstellbar ausgeführt. Die Verstellbarkeit des Anschlags erlaubt eine Variation der anliegenden Kettenspannung. Die durch das Spannmittel erzeugte Verschiebung des Kettenrades ist folglich auf unterschiedliche Maximalwerte begrenzbar.

Die Begrenzung der Verschiebung des Kettenrades erfolgt bevorzugt in der die Kettenspannung erhöhenden Verschiebungsrichtung. Eine Verschiebung des Kettenrades in entgegengesetzter Richtung führt zu einer Reduzierung der anliegenden Kettenspannung. Vorzugsweise kann ein zusätzlicher Anschlag vorgesehen sein, der die Verschiebung des verschieblich gelagerten Kettenrades in der entgegengesetzten Richtung begrenzt.

Aufgrund des erfindungsgemäßen Anschlags kann das Spannmittel mit einem Konstantdruck auf das verschieblich gelagerte Kettenrad einwirken. Die maximal anlie gende Kettenspannung ist durch den Anschlag auf einen Maximalwert begrenzt. Ein Überspannen der Kette wird verhindert, was den Verschleiß der Raupenkette reduziert und ihre Haltbarkeit optimiert.

Das Spannmittel kann vorzugsweise als bekannte Zylindereinheit, insbesondere als Hydraulikzylindereinheit ausgeführt sein. In der Ausführung als Hydraulikzylindereinheit kann ein konstantes Druckniveau an der Hydraulikzylindereinheit anliegen, die das verschieblich gelagerte Kettenrad gegen die Kette presst. Die entsprechende Kettenspannung ist nicht durch Druckregulierung sondern durch den erfindungsgemäßen Anschlag einstellbar. Das Druckniveau des Hydraulikzylinders bleibt konstant. Spezielle Hydraulikkomponenten, wie beispielsweise ein Druckbegrenzungsventil, sind nicht mehr erforderlich. Der Hydraulikzylinder wird beispielsweise mit einem konstanten Maximaldruck beaufschlagt. Der Druck des Kettenrades auf die Kette wird nur über den Anschlag reguliert.

Die Verschiebung des Kettenrades zur Konfiguration der Kettenspannung erfolgt vorzugsweise in Fahrtrichtung. Zweckmäßig ist ein außen liegendes Kettenrad, insbesondere das Leitrad, verschieblich gelagert. Die Verschiebung des Leitrades erfolgt in Fahrtrichtung von den benachbarten Kettenrädern weg, so dass der Druck auf die Ketteninnenseite erhöht wird. In diesem Fall wird durch den erfindungsgemäßen Anschlag die Verschiebung des Leitrades bzw. des Kettenrades in Fahrtrichtung begrenzt.

Die Befestigung wenigstens eines Anschlags erfolgt bevorzugt mittels einer Schraubverbindung. Durch Lösen der Schraubverbindung kann der Anschlag entweder entfernt bzw. versetzt angebracht werden.

Bevorzugt sind ein oder mehrere Bohrungen zur Aufnahme der Schraubverbindung im Bereich der Achsaufnahme des Kettenrades vorgesehen. Diese Bohrungen liegen verteilt in Fahrtrichtung mit gleichem oder variierendem Abstand zueinander, so dass die Fixierung des Anschlags an einer der Bohrungen eine definierte maximale Verschiebung des Kettenrades zulässt.

Die vorliegende Erfindung ist des weiteren auf eine Arbeitsmaschine gerichtet, die wenigstens ein Kettenlaufwerk gemäß einem der voranstehenden Merkmale aufweist. Besonders vorteilhaft ist die Verwendung des erfindungsgemäßen Kettenlaufwerks an einem Raupenkran oder einem Raupenbagger.

Weitere Vorteile und Einzelheiten der Erfindung werden im folgenden anhand der Zeichnungen näher erläutert. Es zeigen:
- Figur 1:: einen Teilbereich des erfindungsgemäßen Kettenlaufwerks in einer Seitenansicht,
- Figur 2:: eine Schnittdarstellung des erfindungsgemäßen Kettenlaufwerks aus Figur 1 entlang der Schnittlinie F-F und
- Figur 3:: eine Detailaufnahme des gekennzeichneten Bereichs A der Figur 2.

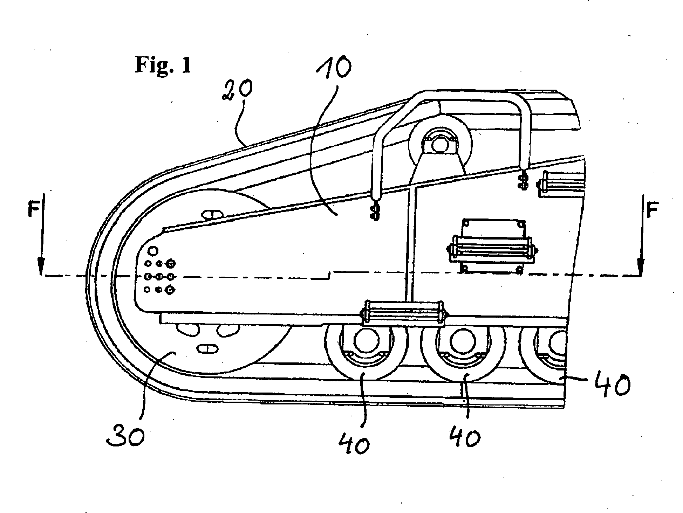

Bezug nehmend auf die Figur 1 soll im folgenden die Funktionsweise des erfindungsgemäßen Kettenlaufwerks nähergebracht werden. Wie der Darstellung aus Figur 1 zu entnehmen ist, besteht das Kettenlaufwerk im wesentlichen aus der Rahmenanordnung 10, die eine Vielzahl von Achsaufnahmen für die einzelnen Kettenräder aufweist. Die Darstellung zeigt den in Fahrtrichtung vorderen Bereich des Kettenlaufwerks. An der Rahmenanordnung 10 ist im vorderen Bereich das Leitrad 30 angeordnet. Am gegenüberliegenden Ende der Rahmenanordnung 10 befindet sich das nicht dargestellte Antriebsrad des Kettenlaufinrerks. Zwischen dem Leitrad 30 und dem nicht dargestellten Antriebsrad befindet sich eine definierte Anzahl an Laufrädern 40. Die Kette 20 des Kettenlaufwerks wird durch die einzelnen Kettenräder getragen und durch das Antriebsrad angetrieben.

Der Kettenaufbau umfasst einzelne Kettenglieder, die über Gelenkanordnungen miteinander gelenkig in Verbindung stehen. Die Kette wird durch den Druck des Leitrades 30 auf die Ketteninnenseite sowie die übrigen Kettenräder auf das erforderliche Spannungsniveau gespannt.

Verschleißerscheinungen an den einzelnen Kettengliedern können zu einem Nachlassen der Kettenspannung führen, wodurch die Kette 20 zum Durchhängen neigt. Um dieser Problematik entgegenzuwirken, ist das Leitrad 30 verschieblich gegenüber der Rahmenanordnung 10 an dieser gelagert. In der Darstellung der Figur 1 lässt sich das Leitrad 30 entlang einer horizontal liegenden Achse nach außen, das heißt von den Laufrädern 40 weg, verschieben, so dass der Anpressdruck des Leitrades 30 auf die Innenseite der Kette 20 ansteigt. Die Kettenspannung steigt hierdurch an.

Um das Leitrad 30 zu verschieben, dient ein an der Rahmenanordnung 10 befestigter Hydraulikzylinder. Die Kolbenstange des Hydraulikzylinders presst das Leitrad 30 aufgrund des anliegenden Hydraulikdrucks gegen die Innenseite der Kette 20.

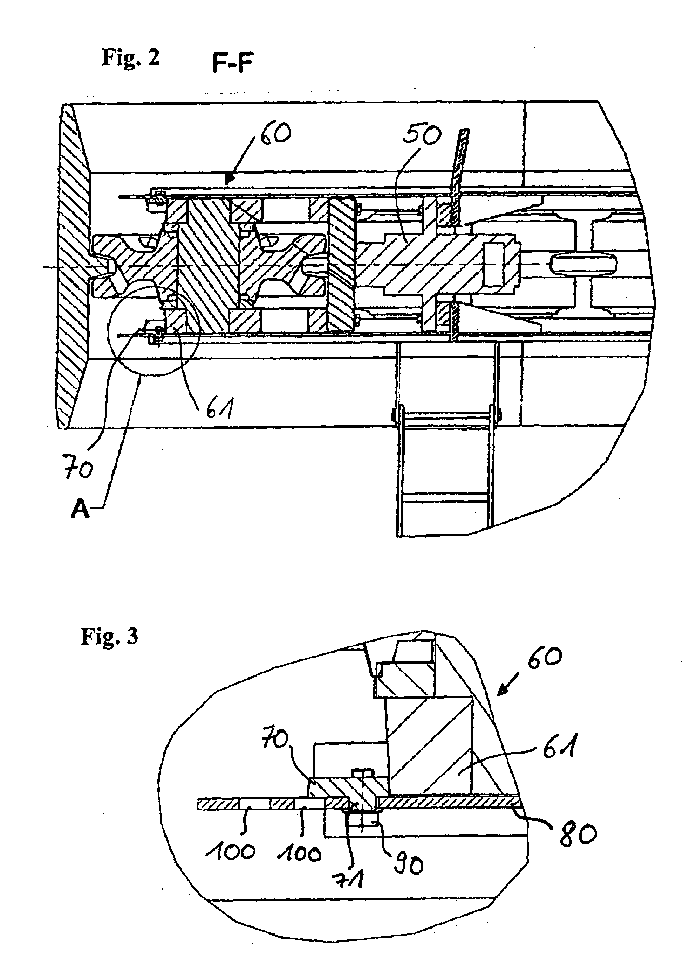

Figur 2 zeigt eine Schnittdarstellung entlang der Längsachse F-F der Figur 1. In der Schnittdarstellung ist der Hydraulikzylinder 50 zu erkennen, dessen Kolben eine Verschiebung der Achsaufnahme 60 des Leitrades 30 in der Zeichenebene nach links bewirkt.

Da auf eine komplexe Hydrauliksteuerung, die zur Einstellbarkeit des Hydraulikdrucks am Hydraulikzylinder 50 erforderlich ist, verzichtet werden soll, ist erfindungsgemäß ein Anschlag 70 vorgesehen, der die Verschiebung der Achsaufnahme 60 begrenzt. Die Achsaufnahme 60 wird im Beispiel der Figur 2 nach links verschoben, bis die Kante 61 am Anschlag 70 anschlägt und die Bewegung der Achsaufnahme 60 bzw. des Leitrades 30 blockiert. Der Druck im Hydraulikzylinder 50 kann daher konstant gehalten werden. Der Umfang der Verschiebung des Leitrades 30 wird einzig durch den Anschlag 70 bestimmt.

Die Anbringung des Kettenanschlags 70 an der Rahmenanordnung 10 ist variabel gestaltet, wodurch die maximale Verschiebung des Leitrades 30 sowie die resultierende Kettenspannung einstellbar ist. Ferner wird durch den vorgestellten Mechanismus ein Überspannen der Kette verhindert. Dies führt insbesondere zur Reduzierung des resultierenden Verschleißes der Raupenkette während des Betriebs und erhöht die Haltbarkeit der Kette 20.

Figur 3 zeigt eine Detaildarstellung des erfindungsgemäßen Anschlags 70 im gekennzeichneten Bereich A der Figur 2. Auf der Platte 80 der Rahmenanordnung 10 befindet sich eine Vielzahl von Bohrungen 100. Der Anschlag 70 besteht im wesentlichen aus einer Platte mit einem vorstehenden Bereich 71, der in die entsprechende Bohrung 100 einsetzbar ist. Die Fixierung des Anschlags 70 an der Platte 80 erfolgt über die Schraubverbindung 90. Die Achsaufnahme 60, die entlang der Platte 80 verschieblich geführt ist, ist durch den angeordneten Anschlag 70 in ihrer Bewegung blockiert. Um die maximale Verschiebung variabel einstellbar zu gestalten, sind mehrere Bohrungen 100 auf der Platte 80 angeordnet. Der Anschlag 70 kann über die Schraubverbindung 90 wahlweise in einer der Bohrungen 100 eingesetzt werden. Die Verstellung des Anschlags 70 ist demnach besonders einfach und schnell auszuführen. Es muss lediglich die Schraubverbindung 90 gelöst und an der Zielbohrung 100 wieder festgezogen werden.

## Patentansprüche

1. Kettenlaufwerk für eine Arbeitsmaschine, insbesondere für einen Raupenkran oder einen Raupenbagger, mit einer Antriebsraupenkette, wenigstens einem verschieblich gelagerten Kettenrad, insbesondere einem Leit- oder Leerlaufrad (30), und mindestens einem Spannmittel, um die Raupenkette zu spannen, und wenigstens ein Anschlag (7c) vorgesehen ist, der die Verschiebung des verschieblich gelagerten Kettenrades begrenzt.
**dadurch gekennzeichnet, dass** im Bereich einer Achsaufnahme (60) des Kettenrades verteilt in Fahrtrichtung mehrere Bohrungen (100) zur Aufnahme wenigstens eines verstellbaren Anschlags (70) vorgesehen sind, so dass die Fixierung des Anschlags an einer der Bohrungen (100) eine definierte maximale Verschiebung zulässt.

2. Kettenlaufwerk nach Anspruch 1, **dadurch gekennzeichnet, dass** das Spannmittel wenigstens eine Zylindereinheit, insbesondere eine Hydraulikzylindereinheit (50) umfasst.

3. Arbeitsmaschine, insbesondere Raupenkran oder Raupenbagger, mit einem Kettenlaufwerk gemäß einem der Ansprüche 1 oder 2.

## Claims

1. A chain drive assembly for a work machine, in particular for a crawler-mounted crane or a crawler excavator, having a drive crawler track, at least one displaceably supported sprocket wheel, in particular a guide wheel or idler wheel (30), and at least one tensioning means to tension the crawler track, and wherein at least one abutment (70) is provided which bounds the displacement of the displaceably supported sprocket wheel,
**characterized in that**
a plurality of boreholes (100) is provided in the region of an axial mount (60) of the sprocket wheel in a distributed manner in the direction of travel for receiving at least one adjustable abutment (70) so that the fixing of the abutment to one of the boreholes (100) allows a defined maximum displacement.

2. A chain drive assembly in accordance claim 1, **characterized in that** the tensioning means includes at least one cylinder unit, in particular a hydraulic cylinder unit (50).

3. A work machine, in particular a crawler-mounted crane or a crawler excavator, having a chain drive assembly in accordance with one of the claims 1 or 2.

## Revendications

1. Dispositif d'entraînement à chenille pour une machine de travail, en particulier pour une grue sur chenilles ou un excavateur sur chenilles, comprenant une chenille d'entraînement, au moins une roue de chenille montée mobile, en particulier une poulie de renvoi ou une roue folle (30), et au moins un moyen de tension pour tendre la chenille, et au moins une butée (70) est prévue qui limite le déplacement de la roue de chenille montée mobile,
**caractérisé en ce que**, dans la zone d'un logement d'axe (60) de la roue de chenille, plusieurs trous (100) sont prévus distribués dans le sens de la marche pour loger au moins une butée réglable (70), de sorte que la fixation de la butée sur l'un des trous (100) permet un déplacement maximal défini.

2. Dispositif d'entraînement à chenille selon la revendication 1, **caractérisé en ce que** le moyen de tension comprend au moins une unité de vérin, en particulier une unité de vérin hydraulique (50).

3. Machine de travail, en particulier grue sur chenilles ou excavateur sur chenilles, comprenant un dispositif d'entraînement à chenille selon l'une des revendications 1 ou 2.
